# DEMANDE DE BREVET EUROPEEN

(11) **EP 4 810 893 A1**
(43) Date de publication de la demande: **23.09.2026**
(21) Numéro de dépôt: 26152865.7
(22) Date de dépôt: 20.01.2026
(51) Int. Cl.: F41G 3/22, F41G 3/02, F41G 3/08, F41G 3/14, F41G 3/16, F41G 5/06, F41G 5/18

(54) **SYSTEME AFFICHAGE, AERONEF ET PROCEDE D' AFFICHAGE POUR AFFICHER UN POINT D'IMPACT VIRTUEL SUR UN AFFICHEUR DE CASQUE**

(30) Priorité: 17.03.2025 FR 2502503
(71) Demandeur: Airbus Helicopters, 13725 Marignane Cedex (FR)
(72) Inventeur: FERRIGNO, Frédéric, 13725 MARIGNANE Cedex (FR)
(74) Mandataire: GPI Brevets

(57) **Abrégé**

La présente invention concerne un système d'affichage 10 configuré pour afficher un point d'impact virtuel sur un afficheur de casque (11), ledit afficheur de casque (11) équipant un casque (12) porté par un opérateur d'un aéronef (1), ledit système d'affichage (10) comportant:
- un organe de mesure (13) mesurant une distance D entre au moins un organe de visée (2) et un obstacle (20),
- un premier dispositif de positionnement 14 apte à déterminer une position et une orientation dudit au moins un organe de visée (2) par rapport à l'aéronef (1),
- un moyen de mesure (15) mesurant au moins un paramètre cinétique lié à un déplacement dudit aéronef (1) par rapport audit obstacle (20),
- un système de mesure (16) mesurant au moins un paramètre extérieur lié à une vitesse et à une orientation du vent, et
- un premier contrôleur (17) configuré pour déterminer une trajectoire d'un élément projeté en fonction au moins d'un type d'élément utilisé, du paramètre cinétique, du paramètre extérieur, de la distance D ainsi que de la position et de l'orientation dudit au moins un organe de visée (2) par rapport à l'aéronef (1).

## Description

La présente invention concerne un système d'affichage configuré pour afficher un point d'impact virtuel sur un afficheur de casque, un aéronef équipé d'un tel système et un procédé d'affichage correspondant.

Un tel point d'impact virtuel correspond à une symbologie désignant une zone d'impact prédite entre un élément projeté par au moins un organe de visée équipant l'aéronef et un obstacle d'un milieu environnant.

En outre, de tels organes de visée peuvent notamment avoir une application pour permettre de viser une cible et peuvent comporter un objet de forme allongée pouvant se présenter sous la forme d'un canon d'une arme, telle une mitraillette, mais également d'une lance à eau pour arroser une zone par exemple pour lutter contre un incendie.

De façon générale, un tel organe de visée est alors mobile en rotation par rapport à un châssis solidaire de l'aéronef selon deux axes de rotation perpendiculaires. Ainsi, l'organe de visée peut se déplacer en rotation par rapport au châssis et peut décrire un premier mouvement de rotation par rapport à un premier axe de rotation en site et un second mouvement de rotation par rapport à un second axe de rotation en gisement.

Un tel organe de visée peut alors être manœuvré par un pilote et le système d'affichage du point d'impact virtuel sur son afficheur de casque permet de prédire avec précision la zone qui pourra être atteinte avec l'élément projeté. Un tel système d'affichage peut alors notamment éviter de projeter l'élément ou des éléments avant de connaitre la position de la zone d'impact réelle.

De manière générale, les systèmes d'affichage configurés pour afficher un point d'impact virtuel sur un afficheur de casque utilisent des algorithmes permettant de déterminer de manière continue un point d'impact prédit. De tels algorithmes sont désignés par l'acronyme anglais « CCIP » se rapportant à l'expression en langue anglaise « Continuously Computed Impact Point ».

Cependant, de tels systèmes d'affichage, tels que notamment décrits dans le document FR2706599A1, sont utilisés par un pilote d'un aéronef qui est assis dans un cockpit de l'aéronef. Un tel afficheur de casque équipe alors un casque porté par un pilote d'un aéronef.

En outre, les systèmes d'affichage comportent un dispositif d'acquisition apte à déterminer une orientation du casque par rapport au cockpit de l'aéronef. Un tel dispositif d'acquisition comporte une caméra montée sur le casque du pilote et une constellation de repères visuels, tels des autocollants, dont les positions respectives sont connues. De tels autocollants sont destinés à être filmés par la caméra et sont donc rapportés en regard de la caméra sur une paroi du cockpit agencée derrière le pilote.

La position du casque est quant à elle sensiblement toujours la même puisque le pilote reste toujours assis et harnaché à son siège.

Si de tels systèmes d'affichage peuvent être utilisés pour les pilotes d'aéronef, ils ne sont cependant pas adaptés pour des opérateurs qui peuvent être amenés à se déplacer dans une cabine, voire au moins en partie à l'extérieur de la cabine en passant au moins partiellement au travers d'une ouverture agencée dans un fuselage de l'aéronef.

En outre, les documents US2022128823A1 et US12117258B1 sont également connus mais sont éloignés de l'invention.

La présente invention a alors pour objet de proposer un système d'affichage, un aéronef et un procédé d'affichage innovants permettant à un opérateur d'aéronef en cabine de s'affranchir des limitations mentionnées ci-dessus.

L'invention concerne donc un système d'affichage configuré pour afficher un point d'impact virtuel sur un afficheur de casque, l'afficheur de casque équipant un casque porté par un opérateur d'un aéronef, le point d'impact virtuel désignant une zone d'impact réelle prédite entre un élément projeté par au moins un organe de visée de l'aéronef et un obstacle d'un milieu environnant, ledit au moins un organe de visée étant configuré pour être manœuvrable par l'opérateur, le système d'affichage comportant au moins un ensemble d'identification comportant :
- un organe de mesure mesurant une distance D entre ledit au moins un organe de visée et l'obstacle,
- un premier dispositif de positionnement apte à déterminer une position et une orientation dudit au moins un organe de visée par rapport à l'aéronef,
- un moyen de mesure mesurant au moins un paramètre cinétique lié à un déplacement de l'aéronef par rapport à l'obstacle,
- un système de mesure mesurant au moins un paramètre extérieur lié à une vitesse et à une orientation du vent,
- un premier contrôleur, tel que par exemple un calculateur de mission, configuré pour déterminer une trajectoire de l'élément projeté en fonction au moins d'un type d'élément utilisé, du paramètre cinétique, du paramètre extérieur, de la distance D ainsi que de la position et de l'orientation dudit au moins un organe de visée par rapport à l'aéronef,
- un second dispositif de positionnement apte à déterminer une position et une orientation du casque par rapport à l'aéronef, et
- un second contrôleur configuré pour identifier sur l'afficheur de casque la position du point d'impact virtuel en fonction de la trajectoire de l'élément et des position et orientation du casque par rapport à l'aéronef.

En outre, un tel organe de mesure d'une distance entre ledit au moins un organe de visée et l'obstacle peut comporter par exemple une caméra, un capteur d'un système électro-optique ou un télémètre laser monté sur l'organe de visée. L'organe de mesure de cette distance est alors connecté par voie filaire ou non filaire au premier contrôleur pour transmettre la distance mesurée instantanément en temps réel.

Le premier dispositif de positionnement apte à déterminer une position et une orientation dudit au moins un organe de visée par rapport à l'aéronef peut quant à lui comporter des moyens de mesure directe et/ou indirecte.

De tels moyens de mesure directs peuvent comprendre différents capteurs électriques telles que par exemple :
- une ou plusieurs roues codeuses pour mesurer un angle de rotation d'un arbre à l'aide de signaux numériques ou analogiques générés par la rotation d'un disque gradué,
- un ou plusieurs micro-gyroscopes de type MEMS aptes à mesurer des accélérations relatives à des changements d'orientations angulaires,
- un ou plusieurs inclinomètres permettant de détecter un ou des angles d'inclinaison de l'organe de visée en fonction de la force gravitationnelle.

Les moyens de mesure indirects peuvent comprendre quant à eux des caméras pour mesurer des distances entre l'organe de visée et des points de référence sur l'aéronef et une unité de traitement configurée pour déterminer ensuite une position et une orientation angulaire par trigonométrie dudit au moins un organe de visée par rapport à l'aéronef. La position peut être mesurée par rapport à un repère fixe rapporté sur un support de l'organe de visée ou sur un fuselage de l'aéronef, également filmé par les caméras.

Les moyens de mesure d'au moins un paramètre cinétique lié à un déplacement de l'aéronef par rapport à l'obstacle peuvent comporter par exemple une centrale inertielle ou encore un système de localisation par satellites tel qu'un système Galileo, GPS, GLONASS...

Le système de mesure d'au moins un paramètre extérieur lié à une vitesse et à une orientation du vent peut par exemple comporter une sonde anémométrique à effet Doppler, des tubes de Pitot ou encore des sondes à fil chaud.

A l'instar de la distance mesurée, toutes ces mesures sont alors transmises par voie filaire ou non filaire au premier contrôleur qui en déduit une trajectoire en fonction du type d'élément projeté utilisé et notamment de sa masse, de sa vitesse de déplacement à la sortie de l'organe de visée et d'une loi mémorisée.

Un tel premier contrôleur peut ainsi par exemple comporter une mémoire dans laquelle une table de valeurs est stockée, cette table de valeurs comportant les caractéristiques de la trajectoire de l'élément projeté en fonction notamment de sa vitesse, de sa masse, de la vitesse et de la direction du vent et de la vitesse et de la direction de déplacement de l'organe de visée par rapport à l'obstacle.

En outre, lorsque le système d'affichage est activé, un opérateur peut voir apparaitre sur son afficheur de casque le point d'impact virtuel sous la forme d'un symbole, tel un cercle ou une croix. Ce symbole est alors affiché en transparence et en superposition sur le milieu environnant vu par l'opérateur au travers de son afficheur de casque qui peut être par exemple intégré dans une visière ou écran du casque.

De plus, lorsque la zone d'impact prédite n'est pas dans le champ de vision de l'opérateur, à savoir si le point d'impact virtuel doit être positionné en dehors de l'afficheur, un autre symbole, telle une flèche, peut être affiché sur son afficheur de casque. Cette flèche indique alors à l'opérateur dans quelle direction tourner sa tête pour pouvoir voir le point d'impact virtuel.

Par ailleurs, un tel point d'impact virtuel peut se déplacer sur l'afficheur de casque en fonction de la trajectoire de l'élément projeté qui est calculée en temps réel par le premier contrôleur et des position et orientation du casque par rapport à l'aéronef. En outre, un tel opérateur n'est pas un pilote de l'aéronef et n'est donc pas assis dans un cockpit de l'aéronef.

L'opérateur est alors agencé dans une cabine externe au cockpit et peut se déplacer dans cette cabine.

En outre, le premier et le second contrôleur peuvent être disjoints ou confondus et ils peuvent comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

En outre, le second dispositif de positionnement est remarquable en ce qu'il comporte des premiers senseurs agencés dans un volume intérieur situé à l'intérieur d'une cabine de l'aéronef et des deuxièmes senseurs agencés dans au moins un volume extérieur situé à l'extérieur de la cabine, la cabine étant située en dehors d'un cockpit de l'aéronef, ledit au moins un volume extérieur étant séparé du volume intérieur par au moins une ouverture de la cabine communiquant avec le milieu environnant.

De cette manière, le second dispositif de positionnement permet de détecter la position et l'orientation du casque porté par l'opérateur même lorsque celui-ci se déplace dans et en dehors de la cabine, et notamment si l'opérateur passe son casque en tout ou partie au travers de l'ouverture dans le milieu environnant.

En pratique, le premier dispositif de positionnement peut comporter des troisièmes senseurs agencés dans le volume extérieur à la cabine.

Comme déjà évoqué, ces troisièmes senseurs agencés dans le volume extérieur à la cabine peuvent être des moyens de mesure directs ou indirects précités.

Avantageusement, les deuxièmes senseurs et les troisièmes senseurs peuvent être confondus et peuvent comporter au moins deux caméras externes agencées contre un fuselage de l'aéronef. De plus, les au moins deux caméras externes peuvent être agencées de part et d'autre de ladite au moins une ouverture de la cabine.

De cette manière, les premier et second dispositifs de positionnement, respectivement de la position et de l'orientation dudit au moins un organe de visée ainsi que de la position et de l'orientation du casque par rapport à l'aéronef, peuvent être mutualisés afin de notamment limiter la masse et la complexité d'installation du système d'affichage.

Selon un exemple de réalisation particulier de l'invention, les au moins deux caméras externes peuvent comporter une caméra externe supérieure et une caméra externe inférieure, la caméra externe supérieure étant orientée dans une première direction externe vers le bas et agencée au-dessus de ladite au moins une ouverture selon une direction en élévation orientée verticalement lorsque l'aéronef repose au sol, la caméra externe inférieure étant orientée dans une seconde direction externe vers le haut distincte de la première direction externe et agencée en dessous de ladite au moins une ouverture selon la direction en élévation.

Ainsi, les caméras externes supérieure et inférieure présentent conjointement un champ de vision global permettant de balayer toutes les positions et orientations dudit au moins un organe de visée ainsi que toutes les positions et orientations du casque porté par l'opérateur en dehors de la cabine.

Selon un autre aspect, les premiers senseurs peuvent comporter au moins deux caméras internes agencées contre un plafond de la cabine et de part et d'autre de ladite au moins une ouverture de la cabine.

Par suite, les caméras internes présentent conjointement un champ de vision global permettant de balayer toutes les positions et orientations du casque porté par l'opérateur à l'intérieur de la cabine.

En pratique, lesdites au moins deux caméras internes peuvent comporter au moins une caméra interne avant et au moins une caméra interne arrière, ladite au moins une caméra interne avant étant orientée dans une première direction interne vers le bas et vers l'arrière et agencée dans une zone avant par rapport à ladite au moins une ouverture selon une direction longitudinale orientée depuis une queue vers un nez de l'aéronef, ladite au moins une caméra interne arrière étant orientée dans une seconde direction interne vers le bas et vers l'avant distincte de la première direction interne et agencée dans une zone arrière par rapport à ladite au moins une ouverture selon la direction longitudinale.

De telles caméras internes avant et arrière peuvent en outre être décalées par rapport à un plan médian vertical parallèle à la direction longitudinale, la ou les caméras internes avant étant alors agencées en étant éloignées du plan médian vertical et la ou les caméras internes arrières étant alors agencées en étant proches du plan médian vertical.

Avantageusement, ladite au moins une caméra interne avant peut comporter une caméra interne avant gauche et une caméra interne avant droite agencées de part et d'autre du plan médian vertical parallèle à la direction longitudinale.

Selon un autre exemple de réalisation de l'invention, ladite au moins une caméra interne arrière peut comporter une caméra interne arrière gauche et une caméra interne arrière droite agencées de part et d'autre du plan médian vertical parallèle à la direction longitudinale.

Selon un autre aspect, l'aéronef étant équipé de deux organes de visée et deux ouvertures correspondantes, le système peut comporter deux ensembles d'identification et une interface de sélection permettant à l'opérateur de sélectionner l'un desdits deux organes de visée à manœuvrer et d'afficher sur l'afficheur de casque le point d'impact virtuel correspondant à l'organe de visée sélectionné.

Une telle interface de sélection peut notamment comporter un interrupteur à bascule bistable mobile entre une première position de sélection permettant de sélectionner alternativement un affichage d'un premier point d'impact virtuel correspondant à un premier organe de visée ou un affichage d'un second point d'impact virtuel correspondant à un second organe de visée distinct du premier organe de visée.

En pratique, les deux organes de visée peuvent être agencés respectivement sur un flanc gauche et un flanc droit de l'aéronef de part et d'autre d'un plan médian vertical parallèle à une direction longitudinale orientée depuis une queue vers un nez de l'aéronef.

Par suite, un même opérateur peut manœuvrer alternativement un premier organe de visée orienté vers un obstacle situé sur la gauche de l'aéronef et un second organe de visée orienté vers un obstacle situé sur la droite de l'aéronef.

Avantageusement, ledit au moins un organe de visée peut comporter une caméra de visée orientée en direction de l'obstacle, l'afficheur de casque affichant au moins une image transmise par la caméra de visée et comportant l'obstacle.

Autrement dit, l'opérateur n'a dans ce cas pas besoin de regarder directement le milieu extérieur pour voir l'obstacle visé par l'organe de visée. Il peut avoir un retour vidéo des images issues de la caméra de visée sur son afficheur de casque. Ainsi, lorsque le système d'affichage est activé, un opérateur peut voir apparaitre sur son afficheur de casque le point d'impact virtuel affiché en superposition sur au moins une image du milieu environnant transmise par la caméra de visée.

L'invention se rapporte également à un aéronef comportant un système d'affichage configuré pour afficher un point d'impact virtuel sur un afficheur de casque.

Un tel aéronef est remarquable ce que le système d'affichage est tel que précédemment décrit.

La présente invention a aussi pour objet un procédé d'affichage d'un point d'impact virtuel sur un afficheur de casque, l'afficheur de casque équipant un casque porté par un opérateur d'un aéronef, le point d'impact virtuel désignant une zone d'impact réelle prédite entre un élément projeté par au moins un organe de visée de l'aéronef et un obstacle d'un milieu environnant, ledit au moins un organe de visée étant configuré pour être manœuvrable par l'opérateur, le procédé d'affichage comportant des étapes de :
- mesure d'une distance D entre ledit au moins un organe de visée et l'obstacle,
- détermination d'une position et d'une orientation dudit au moins un organe de visée par rapport à l'aéronef,
- mesure d'au moins un paramètre cinétique lié à un déplacement de l'aéronef par rapport à l'obstacle,
- mesure d'au moins un paramètre extérieur lié à une vitesse et à une orientation du vent,
- détermination d'une trajectoire de l'élément projeté en fonction au moins d'un type d'élément utilisé, du paramètre cinétique, du paramètre extérieur, de la distance D ainsi que de la position et de l'orientation dudit au moins un organe de visée par rapport à l'aéronef,
- détermination d'une position et d'une orientation du casque par rapport à l'aéronef, cette détermination pouvant être réalisée dans un environnement libre aussi bien à l'intérieur qu'à l'extérieur de la cabine, et
- identification sur l'afficheur de casque de la position du point d'impact virtuel en fonction de la trajectoire de l'élément et des position et orientation du casque par rapport à l'aéronef.

Le procédé est ainsi remarquable en ce que la détermination d'une position et d'une orientation du casque par rapport à l'aéronef est opérée à la fois dans un volume intérieur situé à l'intérieur d'une cabine de l'aéronef et dans un volume extérieur situé à l'extérieur de la cabine, la cabine étant située en dehors d'un cockpit de l'aéronef, le volume extérieur étant séparé du volume intérieur par au moins une ouverture de la cabine communiquant avec le milieu environnant.

Autrement dit, un tel procédé d'affichage permet à un opérateur situé dans une cabine de visualiser un point d'impact virtuel sur son afficheur de casque avant de projeter un élément sur un obstacle du milieu environnant.

L'invention et ses avantages apparaîtront avec plus de détails dans le cadre de la description qui suit avec des exemples donnés à titre illustratif en référence aux figures annexées qui représentent :
la figure 1, une vue en perspective d'un aéronef conforme à l'invention ,
la figure 2, une vue en perspective d'une portion extérieure de l'aéronef de la figure 1,
la figure 3, une vue en perspective et en coupe transversale d'un aéronef conforme à l'invention,
la figure 4, une vue de dessus et en coupe d'un aéronef conforme à l'invention, et
la figure 5, un logigramme illustrant un procédé d'affichage conforme à l'invention.

Les éléments présents dans plusieurs figures distinctes sont affectés d'une seule et même référence.

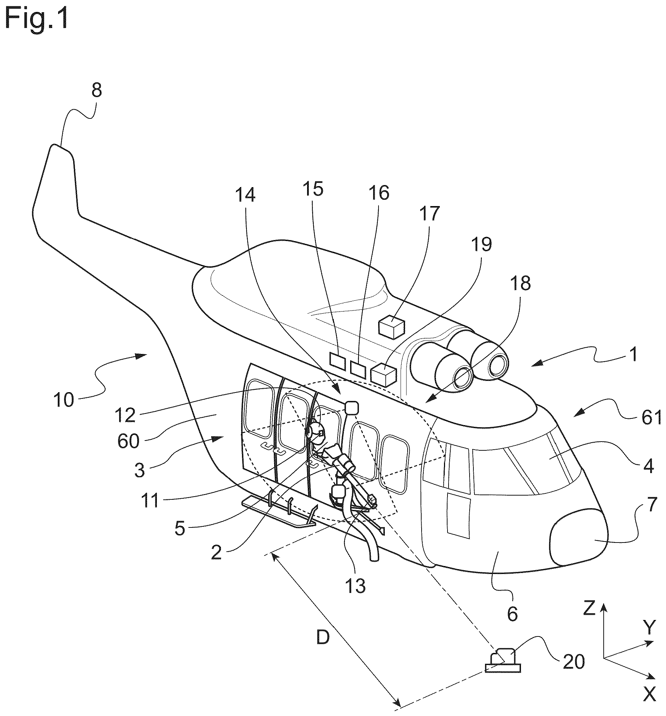

Trois directions X, Y et Z orthogonales les unes par rapport aux autres sont représentées sur les figures 1 à 4.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

Tel que représenté à la figure 1, l'aéronef 1 peut se présenter sous la forme d'un giravion ou d'un hélicoptère en particulier et comporter au moins un rotor participant à la sustentation, voire à la propulsion, de l'aéronef 1 dans l'air.

Un opérateur d'un aéronef 1 est alors positionné dans une cabine 3 disjointe d'un cockpit 4 accueillant quant à lui au moins un pilote. L'opérateur peut alors manœuvrer au moins un organe de visée 2, 2' équipant l'aéronef 1. Un tel organe de visée 2, 2' peut notamment permettre de viser une cible et peut comporter un objet de forme allongée pouvant se présenter sous la forme d'un canon d'une arme, telle une mitraillette, mais également d'une lance à eau pour arroser une cible par exemple pour lutter contre un incendie.

L'organe de visée 2, 2' peut ainsi permettre de projeter un élément, un projectile ou de l'eau en direction d'un objet, d'un feu ou de manière plus générale vers un obstacle 20 du milieu environnant.

Un tel aéronef 1 comporte alors un système d'affichage 10 configuré pour afficher un point d'impact virtuel sur un afficheur de casque 11 équipant un casque 12 porté par l'opérateur.

Un tel point d'impact virtuel correspond alors à une symbologie désignant une zone d'impact réelle, estimée par calculs, susceptible d'être atteinte par un élément projeté dans les conditions courantes. Ainsi, le point d'impact virtuel est sensiblement situé sur une droite allant de la zone d'impact réelle aux yeux de l'opérateur.

Pour ce faire, le système d'affichage 10 comporte au moins un ensemble d'identification extérieur 60, et intérieur 61 comportant un organe de mesure 13 mesurant une distance D entre ledit au moins un organe de visée 2, 2' et l'obstacle 20. Un tel organe de mesure 13 peut comporter par exemple une caméra, un capteur d'un système électro-optique ou un télémètre laser monté sur l'organe de visée 2, 2'.

Par ailleurs, le au moins un ensemble d'identification 60, 61 comporte un premier dispositif de positionnement 14 apte à déterminer une position et une orientation de l'organe de visée 2, 2' par rapport à l'aéronef 1.

Le au moins un ensemble d'identification 60, 61 comporte un moyen de mesure 15 mesurant au moins un paramètre cinétique lié à un déplacement d'aéronef 1 par rapport à l'obstacle 20.

Le au moins un ensemble d'identification 60, 61 comporte un système de mesure 16 mesurant au moins un paramètre extérieur lié à une vitesse et à une orientation du vent.

Le au moins un ensemble d'identification 60, 61 comporte alors un premier contrôleur 17 relié par voie filaire ou non filaire à l'organe de mesure 13, au premier dispositif de positionnement 14, au moyen de mesure 15 et au système de mesure 16.

Un premier contrôleur 17 reçoit ainsi des signaux électriques numériques ou analogiques représentatifs des différentes mesures, déterminations et éventuellement calculs. Le premier contrôleur 17 est en effet configuré pour déterminer, à l'aide d'une loi mémorisée établie par essais et/ou calculs et/ou simulations pouvant comprendre au moins une équation ou une intelligence artificielle ou tout autre forme usuelle par exemple, une trajectoire de l'élément projeté en fonction au moins d'un type d'élément utilisé, du paramètre cinétique, du paramètre extérieur, de la distance D ainsi que de la position et de l'orientation de l'organe de visée 2, 2' par rapport à l'aéronef 1.

En outre, le type d'élément utilisé peut impacter la trajectoire prédite puisque celle-ci sera fonction notamment de la masse de l'élément ou encore de sa vitesse de déplacement à la sortie de l'organe de visée 2, 2'.

Un tel premier contrôleur 17 peut ainsi comporter une mémoire dans laquelle une table de valeurs est stockée et comporte des caractéristiques techniques relatives à l'élément projeté telles que sa vitesse, sa masse, son éventuelle déviation en fonction de la vitesse et de la direction du vent et de la vitesse et de la direction de déplacement de l'organe de visée 2, 2' par rapport à l'obstacle 20.

Par ailleurs, le au moins un ensemble d'identification 60, 61 comporte également un second dispositif de positionnement 18 apte à déterminer une position et une orientation du casque 12 par rapport à l'aéronef 1 et un second contrôleur 19 configuré pour identifier sur l'afficheur de casque 11 la position du point d'impact virtuel en fonction de la trajectoire de l'élément ainsi que de la position et de l'orientation du casque 12 par rapport à l'aéronef 1.

Selon l'exemple de la figure 1, les premier contrôleur 17 et second contrôleur 19 peuvent être différents et disjoints l'un de l'autre. Selon une variante d'un tel système d'affichage non représentée, les premier contrôleur 17 et le second contrôleur 19 peuvent être confondus et faire partie d'un ensemble de calcul tel un ordinateur de mission équipant l'aéronef 1.

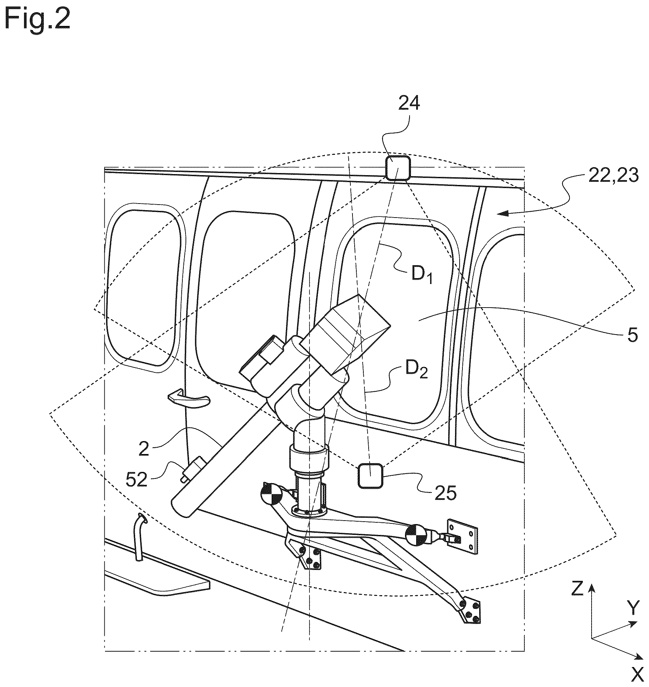

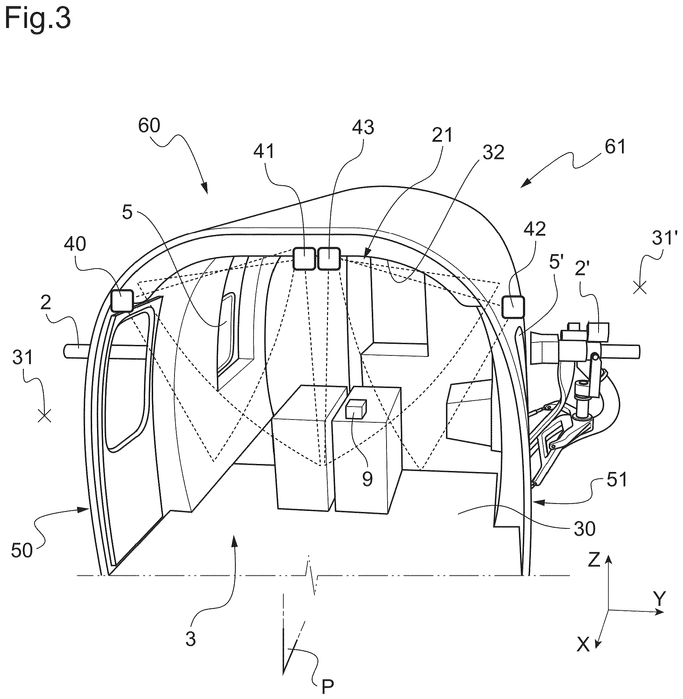

En outre, tel que représenté plus en détail à la figure 2 et à la figure 3, un tel second dispositif de positionnement 18 comporte des premiers senseurs 21 agencés dans un volume intérieur 30 situé à l'intérieur de la cabine 3 recevant l'opérateur et des deuxièmes senseurs 22 agencés dans au moins un volume extérieur 31, 31' situé à l'extérieur de la cabine 3.

En outre, un tel volume extérieur 31, 31' peut être agencé latéralement selon la direction transversale Y par rapport à au moins une ouverture 5, 5' ménagée dans le fuselage 6 au niveau de la cabine 3. De telles ouvertures 5, 5' permettent ainsi de faire communiquer la cabine 3 avec le milieu environnant et notamment à l'opérateur de saisir l'organe de visée 2, 2' pour le manœuvrer.

En outre, le premier dispositif de positionnement 14 comporte des troisièmes senseurs 23 agencés dans le volume extérieur 31, 31'.

Par les expressions premiers, deuxièmes et troisièmes senseurs, on entend ici désigner aussi bien des capteurs physiques capables de mesurer directement le paramètre en question mais aussi des systèmes pouvant comprendre un ou plusieurs capteur(s) physique(s) ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

De manière à limiter la masse et à simplifier l'architecture électrique du système d'affichage 10, les deuxièmes senseurs et les troisièmes senseurs peuvent être confondus et comporter au moins deux caméras externes 24, 25 agencées contre le fuselage 6 de l'aéronef 1 et de part et d'autre de l'ouverture 5, 5'.

Un tel système d'affichage 10 peut ainsi comporter une architecture mutualisée pour effectuer la détermination de la position et de l'orientation du casque 12 et la détermination de la position et de l'orientation de l'organe de visée 2, 2' par rapport à l'aéronef 1. Les caméras 24, 25 peuvent communiquer avec une unité de traitement configurée pour analyser les images de manière connue et effectuer les calculs précités.

Par ailleurs, les au moins deux caméras externes 24, 25 peuvent comporter une caméra externe supérieure 24 et une caméra externe inférieure 25. La caméra externe supérieure 24 est ainsi orientée dans une première direction externe D1 vers le bas et agencée au-dessus de l'ouverture 5, 5' selon la direction en élévation Z.

De même, la caméra externe inférieure 25 est quant à elle orientée dans une seconde direction externe D2 vers le haut distincte de la première direction externe D1 et agencée en dessous de l'ouverture 5, 5' selon la direction en élévation Z.

Par ailleurs, l'organe de visée 2, 2' peut également être équipé d'une caméra de visée 52, 52' qui est solidaire de l'organe de visée 2, 2' et donc configurée pour être orientée en direction de l'obstacle 20. Cette caméra de visée 52, 52' permet de générer au moins une image ou un flux vidéo qui est transmis à l'afficheur de casque 11 du casque 12 porté par l'opérateur.

L'afficheur de casque 11 peut alors, si nécessaire, afficher cette ou ces images transmises par la caméra de visée 52, 52' et à l'opérateur de voir une représentation de l'obstacle 20 et, en superposition, le point d'impact virtuel. Un tel mode de réalisation peut notamment être utilisé si l'opérateur est agencé derrière une paroi opaque ne lui permettant pas de visualiser l'intégralité du milieu extérieur, et en particulier l'obstacle 20.

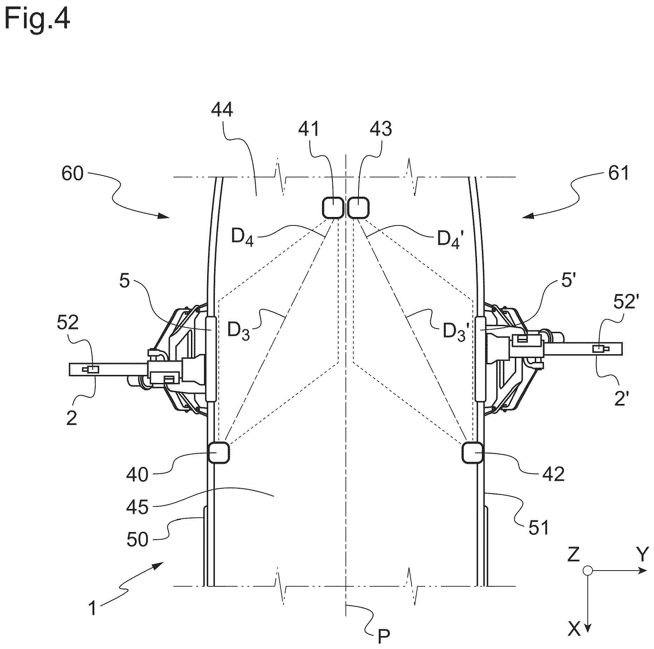

En outre, les premiers senseurs 21 peuvent quant à eux comporter au moins deux caméras internes 40, 41, 42, 43, et par exemple quatre caméras internes 40, 41, 42, 43 telles que représentées aux figures 3 et 4. Les caméras 40 à 43 peuvent communiquer avec une unité de traitement configurée pour analyser les images de manière connue et effectuer les calculs précités.

Ces quatre caméras internes 40, 41, 42, 43 sont alors agencées contre un plafond 32 de la cabine 3 et de part et d'autre de ladite au moins une ouverture 5, 5' de la cabine 3 suivant la direction longitudinale X orientée depuis une queue 8 vers un nez 7 de l'aéronef 1.

Ainsi, lesdites au moins deux caméras internes 40, 41, 42, 43 peuvent comporter au moins une caméra interne avant 41, 43 et au moins une caméra interne arrière 40, 42 par rapport ladite au moins une ouverture 5, 5'.

Chaque caméra interne avant 41, 43 est orientée dans une première direction interne D4, D4' vers le bas et vers l'arrière et agencée dans une zone avant 44 de la cabine par rapport à ladite au moins une ouverture 5, 5' selon la direction longitudinale X.

Chaque caméra interne arrière 40, 42 est quant à elle orientée dans une seconde direction interne D3, D3' vers le bas et vers l'avant distincte de ladite première direction interne D4, D4' et agencée dans une zone arrière 45 par rapport à ladite au moins une ouverture 5, 5' selon la direction longitudinale X.

Plus précisément, ladite au moins une caméra interne avant 41, 43 peut comporter une caméra interne avant gauche 41 et une caméra interne avant droite 43 agencées de part et d'autre du plan médian vertical P.

De même, ladite au moins une caméra interne arrière 40, 42 peut comporter une caméra interne arrière gauche 40 et une caméra interne arrière droite 42 agencées de part et d'autre du plan médian vertical P.

Par ailleurs, lorsque l'aéronef 1 est équipé de deux organes de visée 2, 2' et deux ouvertures correspondantes 5, 5' permettant à l'opérateur de manœuvrer alternativement les deux organes de visée 2, 2', le système 10 peut comporter deux ensembles d'identification tels que décrits précédemment et une interface de sélection 9 permettant à l'opérateur de sélectionner l'un desdits deux organes de visée 2, 2' qu'il souhaite manœuvrer. Une telle interface de sélection 9 permet alors de sélectionner un affichage sur l'afficheur de casque 11 du point d'impact virtuel correspondant à l'organe de visée 2, 2' sélectionné.

Par exemple, les deux organes de visée 2, 2' peuvent être agencés respectivement sur un flanc droit 51 et un flanc gauche 50 de l'aéronef 1 de part et d'autre du plan médian vertical P.

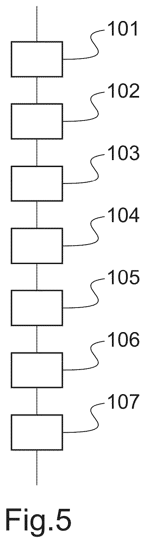

Tel que représenté à la figure 5, l'invention concerne également un procédé 100 d'affichage d'un point d'impact virtuel sur l'afficheur de casque 11 précité.

Ce procédé 100 d'affichage comporte une mesure 101 de la distance D entre au moins un des organes de visée 2, 2' et l'obstacle 20, cette mesure 101 étant mise en œuvre à l'aide de l'organe de mesure 13.

Le procédé 100 d'affichage comporte également une détermination 102 d'une position et d'une orientation dudit au moins un organe de visée 2, 2' par rapport à l'aéronef 1, une telle détermination 102 étant mise en œuvre à l'aide du premier dispositif de positionnement 14.

Le procédé 100 d'affichage comporte une mesure 103 d'au moins un paramètre cinétique lié à un déplacement de l'aéronef 1 par rapport à l'obstacle 20, cette mesure 103 étant mise en œuvre avec le moyen de mesure 15.

Le procédé 100 d'affichage comporte aussi une mesure 104 d'au moins un paramètre extérieur lié à une vitesse et à une orientation du vent avec le système de mesure 16 et une détermination 105, à l'aide du premier contrôleur 17, d'une trajectoire de l'élément projeté en fonction au moins d'un type d'élément utilisé, du paramètre cinétique, du paramètre extérieur, de la distance D ainsi que de la position et de l'orientation dudit au moins un organe de visée 2, 2' par rapport à l'aéronef 1.

Dès lors, le procédé 100 comporte une étape de détermination 106, avec le second dispositif de positionnement 18, d'une position et d'une orientation du casque 12 par rapport à l'aéronef 1, puis une étape d'identification 107, avec le second contrôleur 19, sur l'afficheur de casque 11 de la position du point d'impact virtuel en fonction de la trajectoire de l'élément et des position et orientation du casque 12 par rapport à l'aéronef 1.

Avantageusement, l'étape de détermination 106 d'une position et d'une orientation du casque 12 par rapport à l'aéronef 1 peut être mise œuvre alternativement dans le volume intérieur 30 et dans le ou les volumes extérieurs 31, 31'.

Enfin, le procédé 100 met en œuvre l'affichage d'un symbole illustrant un tel point d'impact virtuel sur l'afficheur de casque 11, ce symbole prenant par exemple la forme d'un cercle, si la zone d'impact réelle est dans le champ de vision de l'opérateur.

Dans la négative, l'afficheur de casque12 peut afficher un autre symbole, telle une flèche, pour indiquer à l'opérateur dans quelle direction tourner sa tête afin de pouvoir afficher le point d'impact virtuel sur l'afficheur de casque 11.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention définie par les revendications.

## Revendications

1. Système d'affichage (10) configuré pour afficher un point d'impact virtuel sur un afficheur de casque (11), ledit afficheur de casque (11) équipant un casque (12) porté par un opérateur d'un aéronef (1), ledit point d'impact virtuel désignant une zone d'impact réelle prédite entre un élément projeté par au moins un organe de visée (2, 2') de l'aéronef (1) et un obstacle (20) d'un milieu environnant, ledit au moins un organe de visée (2, 2') étant configuré pour être manœuvrable par ledit opérateur, ledit système d'affichage (10) comportant au moins un ensemble d'identification (60, 61) comportant :
- un organe de mesure (13) mesurant une distance D entre ledit au moins un organe de visée (2, 2') et ledit obstacle (20),
- un premier dispositif de positionnement (14) apte à déterminer une position et une orientation dudit au moins un organe de visée (2, 2') par rapport à l'aéronef (1),
- un moyen de mesure (15) mesurant au moins un paramètre cinétique lié à un déplacement dudit aéronef (1) par rapport audit obstacle (20),
- un système de mesure (16) mesurant au moins un paramètre extérieur lié à une vitesse et à une orientation du vent,
- un premier contrôleur (17) configuré pour déterminer une trajectoire de l'élément projeté en fonction au moins d'un type d'élément utilisé, du paramètre cinétique, du paramètre extérieur, de la distance D ainsi que de la position et de l'orientation dudit au moins un organe de visée (2, 2') par rapport à l'aéronef (1),
- un second dispositif de positionnement (18) apte à déterminer une position et une orientation dudit casque (12) par rapport à l'aéronef (1), et
- un second contrôleur (19) configuré pour identifier sur ledit afficheur de casque (11) ladite position du point d'impact virtuel en fonction de la trajectoire de l'élément et desdites position et orientation dudit casque (12) par rapport à l'aéronef (1),
**caractérisé en ce que** ledit second dispositif de positionnement (18) comporte des premiers senseurs (21) agencés dans un volume intérieur (30) situé à l'intérieur d'une cabine (3) de l'aéronef (1) et des deuxièmes senseurs (22) agencés dans au moins un volume extérieur (31, 31') situé à l'extérieur de ladite cabine (3), ladite cabine (3) étant située en dehors d'un cockpit (4) de l'aéronef (1), ledit au moins un volume extérieur (31, 31') étant séparé du volume intérieur (30) par au moins une ouverture (5, 5') de ladite cabine (3) communiquant avec ledit milieu environnant.

2. Système d'affichage (10) selon la revendication 1,
**caractérisé en ce que** ledit premier dispositif de positionnement (14) comporte des troisièmes senseurs (23) agencés dans ledit volume extérieur (31, 31') à ladite cabine (3).

3. Système d'affichage (10) selon les revendications 1 et 2,
**caractérisé en ce que** lesdits deuxièmes senseurs (22) et lesdits troisièmes senseurs (23) sont confondus et comportent au moins deux caméras externes (24, 25) agencées contre un fuselage (6) dudit aéronef (1).

4. Système d'affichage (10) selon la revendication 3,
**caractérisé en ce que** lesdites au moins deux caméras externes (24, 25) sont agencées de part et d'autre de ladite au moins une ouverture (5, 5') de ladite cabine (3).

5. Système d'affichage (10) selon la revendication 4,
**caractérisé en ce que** lesdites au moins deux caméras externes (24, 25) comportent une caméra externe supérieure (24) et une caméra externe inférieure (25), ladite caméra externe supérieure (24) étant orientée dans une première direction externe (D1) vers le bas et agencée au-dessus de ladite au moins une ouverture (5, 5') selon une direction en élévation (Z) orientée verticalement lorsque l'aéronef (1) repose au sol, ladite caméra externe inférieure (25) étant orientée dans une seconde direction externe (D2) vers le haut distincte de ladite première direction externe (D1) et agencée en dessous de ladite au moins une ouverture (5, 5') selon ladite direction en élévation (Z).

6. Système d'affichage selon l'une quelconque des revendications 1 à 5,
**caractérisé en ce que** lesdits premiers senseurs (21) comportent au moins deux caméras internes (40, 41, 42, 43) agencées contre un plafond (32) de ladite cabine (3) et de part et d'autre de ladite au moins une ouverture (5, 5') de ladite cabine (3).

7. Système selon la revendication 6,
**caractérisé en ce que** lesdites au moins deux caméras internes (40, 41, 42, 43) comportent au moins une caméra interne avant (41, 43) et au moins une caméra interne arrière (40, 42), ladite au moins une caméra interne avant (41, 43) étant orientée dans une première direction interne (D4, D4') vers le bas et vers l'arrière et agencée dans une zone avant (44) par rapport à ladite au moins une ouverture (5, 5') selon une direction longitudinale (X) orientée depuis une queue (8) vers un nez (7) de l'aéronef (1), ladite au moins une caméra interne arrière (40, 42) étant orientée dans une seconde direction interne (D3, D3') vers le bas et vers l'avant distincte de ladite première direction interne (D4, D4') et agencée dans une zone arrière (45) par rapport à ladite au moins une ouverture (5, 5') selon ladite direction longitudinale (X).

8. Système selon la revendication 7,
**caractérisé en ce que** ladite au moins une caméra interne avant (41, 43) comporte une caméra interne avant gauche (41) et une caméra interne avant droite (43) agencées de part et d'autre d'un plan médian vertical (P) parallèle à ladite direction longitudinale (X).

9. Système selon l'une quelconque des revendications 7 à 8,
**caractérisé en ce que** ladite au moins une caméra interne arrière (40, 42) comporte une caméra interne arrière gauche (40) et une caméra interne arrière droite (42) agencées de part et d'autre d'un plan médian vertical (P) parallèle à ladite direction longitudinale (X).

10. Système selon l'une quelconque des revendications 1 à 9,
**caractérisé en ce que**, ledit aéronef (1) étant équipé de deux organes de visée (2, 2') et deux ouvertures correspondantes (5, 5'), ledit système (10) comporte deux ensembles d'identification (60, 61) et une interface de sélection (9) permettant audit opérateur de sélectionner l'un desdits deux organes de visée (2, 2') à manœuvrer et d'afficher sur ledit afficheur de casque (11) ledit point d'impact virtuel correspondant audit organe de visée (2, 2') sélectionné.

11. Système selon la revendication 10,
**caractérisé en ce que** lesdits deux organes de visée (2, 2') sont agencés respectivement sur un flanc droit (50) et un flanc gauche (51) dudit aéronef (1) de part et d'autre d'un plan médian vertical (P) parallèle à une direction longitudinale (X) orientée depuis une queue (8) vers un nez (7) de l'aéronef (1).

12. Système selon l'une quelconque des revendications 1 à 11,
**caractérisé en ce que** ledit au moins un organe de visée (2, 2') comporte une caméra de visée (52, 52') orientée en direction dudit obstacle (20), ledit afficheur de casque (11) affichant au moins une image transmise par ladite caméra de visée (52, 52') et comportant ledit obstacle (20).

13. Aéronef (1) comportant un système d'affichage (10) configuré pour afficher un point d'impact virtuel sur un afficheur de casque (11),
**caractérisé en ce que** ledit système d'affichage (10) est selon l'une quelconque des revendications 1 à 13.

14. Procédé (100) d'affichage d'un point d'impact virtuel sur un afficheur de casque (11), ledit afficheur de casque (11) équipant un casque (12) porté par un opérateur d'un aéronef (1), ledit point d'impact virtuel désignant une zone d'impact réelle prédite entre un élément projeté par au moins un organe de visée (2, 2') de l'aéronef (1) et un obstacle (20) d'un milieu environnant, ledit au moins un organe de visée (2, 2') étant configuré pour être manœuvrable par ledit opérateur, ledit procédé (100) d'affichage comportant des étapes de :
- mesure (101) d'une distance D entre ledit au moins un organe de visée (2, 2') et ledit obstacle (20),
- détermination (102) d'une position et d'une orientation dudit au moins un organe de visée (2, 2') par rapport à l'aéronef (1),
- mesure (103) d'au moins un paramètre cinétique lié à un déplacement dudit aéronef (1) par rapport audit obstacle (20),
- mesure (104) d'au moins un paramètre extérieur lié à une vitesse et à une orientation du vent,
- détermination (105) d'une trajectoire de l'élément projeté en fonction au moins d'un type d'élément utilisé, du paramètre cinétique, du paramètre extérieur, de la distance D ainsi que de la position et de l'orientation dudit au moins un organe de visée (2, 2') par rapport à l'aéronef (1),
- détermination (106) d'une position et d'une orientation dudit casque (12) par rapport à l'aéronef (1), et
- identification (107) sur ledit afficheur de casque (11) de la position du point d'impact virtuel en fonction de la trajectoire de l'élément et desdites position et orientation dudit casque (12) par rapport à l'aéronef (1),
**caractérisé en ce que** ladite détermination (106) d'une position et d'une orientation dudit casque (12) par rapport à l'aéronef (1) est opérée à la fois dans un volume intérieur (30) situé à l'intérieur d'une cabine (3) de l'aéronef (1) et dans un volume extérieur (31, 31') situé à l'extérieur de ladite cabine (3), ladite cabine (3) étant située en dehors d'un cockpit (4) de l'aéronef (1), ledit volume extérieur (31, 31') étant séparé du volume intérieur (30) par ladite au moins une ouverture (5, 5') de ladite cabine (3) communiquant avec ledit milieu environnant.
